Europäisches Patentamt

European Patent Office

Office européen des brevets

(11) Veröffentlichungsnummer : **0 019 139**
**B1**

(19)

(12) EUROPÄISCHE PATENTSCHRIFT

(45) Veröffentlichungstag der Patentschrift :
11.05.83

(51) Int. Cl.³ : **G 06 G   7/161**, G 06 G   7/22

(21) Anmeldenummer : 80102302.9

(22) Anmeldetag : 28.04.80

(54) Pulsbreiten-Mehrfachmultiplizierer.

(30) Priorität : 16.05.79 DE 2919786

(43) Veröffentlichungstag der Anmeldung :
26.11.80 Patentblatt 80/24

(45) Bekanntmachung des Hinweises auf die Patenterteilung : 11.05.83 Patentblatt 83/19

(84) Benannte Vertragsstaaten :
AT BE CH DE FR GB IT LI NL SE

(56) Entgegenhaltungen :
DE A 1 170 685
DE A 1 239 507
FR A 2 271 616
US A 3 466 460
US A 3 536 904
US A 3 569 688
IRE TRANSACTIONS ON ELECTRONIC COMPU-
TERS, Band EC-5, Nr. 1, März 1956, New York,
US, M. LEJET et al. : « A time-division multiplier », Seiten 26-34

(73) Patentinhaber : SIEMENS AKTIENGESELLSCHAFT
Berlin und München Wittelsbacherplatz 2
D-8000 München 2 (DE)

(72) Erfinder : Blaschke, Felix, Dr.
Steinforststrasse 19
D-8520 Erlangen (DE)

Pulsbreiten-Mehrfachmultiplizierer

Die Erfindung betrifft einen Pulsbreitenmultiplizierer, bei dem eine dem ersten Faktor eines Produktes entsprechende Eingangsspannung mittels eines Schalters und eines Invertierers mit alternierendem Vorzeichen auf ein Glättungsglied aufschaltbar ist. Der Schalter wird mittels den zweiten Faktor des Produktes darstellender breitenmodulierter Impulse betätigt.

Ein derartiger Multiplizierer zur Bildung einer Ausgangsgröße $U_a = x/y \cdot z$ aus den Eingangsspannungen x, y, z ist handelsüblich (Time-Division-Multiplizierer, Typ EL 1/299.02 der Siemens AG, Preisliste RE 1, Mai 1972, Seite 6/33 bis 36). Bei diesem Baustein wird die Eingangsspannung z über einen ersten Umschalter abwechselnd direkt (Schaltdauer $t_1$) und über einen Invertierer mit umgekehrtem Vorzeichen (Schaltdauer $t_2$) an den Eingang eines Glättungsgliedes gelegt. Der Schalter wird mittels Impulsen, die aus den Eingangsspannungen x und y gebildet werden, so betätigt, daß $(t_1 - t_2)/(t_1 + t_2) = x/y$ ist, so daß am Ausgang des Glättungsgliedes eine Ausgangsspannung $U_a = z \cdot x/y$ ansteht (Prinzip der Impulsbreitenmultiplikation). Zur Bildung der Schaltimpulse ist ein Sägezahngenerator, ein Zweipunktglied (Grenzwertmelder) und ein weiterer Umschalter vorgesehen, der die Eingangsspannung y abwechselnd direkt und über einen weiteren Invertierer weiterleitet und simultan mit den Schaltimpulsen für den ersten Umschalter umgeschaltet wird. Zur Erzeugung der Sägezähne ist an den invertierenden Eingang eines I-Gliedes die Eingangsspannung x und das Ausgangssignal $y'$ des zweiten Umschalters gelegt. An das Zweipunktglied wird als Grenzwert ebenfalls die Umschalter-Ausgangsspannung $y' = \pm y$ angelegt, und mit dem Ausgangssignal des Zweipunktgliedes wird der zweite Umschalter betätigt, sobald die vom I-Glied gelieferte Hilfsspannung den Grenzwert y erreicht. Nach Umschalten des zweiten Umschalters in die Stellung $y' = + y$ steigt somit die Hilfsspannungskurve durch Integration der Eingangsgrößen $(x + y)$ linear an, bis es nach der Zeit $t_1$ den Grenzwert $+ y$ erreicht. Sodann wird der Umschalter in die Stellung $y' = - y$ umgelegt und die Hilfsspannungskurve sinkt während der Schaltdauer $t_2$ linear, entsprechend den Eingangsgrößen $(x - y)$ des I-Gliedes. Für die Schaltdauer $t_1$ und $t_2$ der beiden Umschalter wird dadurch die Bedingung $x/y = (t_1 - t_2)/(t_1 + t_2)$ erreicht. Dieser bekannte Multiplizierer enthält 6 Potentiometer zum Abgleich und zur Normierung.

Derartige Pulsbreitenmultiplizierer zeichnen sich durch hohe Genauigkeit aus. Jedoch wächst der Aufwand an Schaltelementen und Abgleichsarbeit, sobald für bestimmte Anwendungsgebiete, z. B. bei Steuerungen, mehrere derartige Multiplikationen erforderlich sind. Ferner sind derartige Pulsbreitenmultiplizierer für Multiplikation konstanter Eingangsgröße bestimmt. Bei veränderlichen Eingangsgrößen können durch das Glättungsglied zeitliche Verzerrungen entstehen. Dies tritt z. B. auf, wenn Maschinen in Abhängigkeit von den Positionen umlaufender Maschinenteile gesteuert und zur Analog-Steuerung die den Maschinenpositionen entsprechenden zeitlich veränderlichen Eingangsgrößen miteinander multipliziert und addiert werden müssen, wobei die einzelnen Faktoren der zu addierenden Produkte in gemeinsamer Weise zeitabhängig sind. Würde in diesen Fällen zu jeder Produktbildung ein derartiger Pulsbreitenmultiplizierer verwendet, so entstehen durch die Addition der Ausgangssignale der einzelnen Glättungsglieder Überlagerungen und Schwebungen, die nur vermieden werden können, wenn die einzelnen Glättungsglieder in ihrem Zeitverhalten sorgfältig aufeinander abgestimmt wären. Da jedoch die für die Glättungsglieder nötigen Kondensatoren nur mit diskreten Kapazitätswerten und erheblichen Fertigungstoleranzen zur Verfügung stehen, sind übliche Pulsbreitenmultiplizierer für solche Zwecke ungeeignet. So sind z. B. nach der DE-PS 1 941 312 zur Multiplikation bei einer Steuerung einer Asynchronmaschine Kennlinienmultiplizierer vorgesehen. Aus der französischen Patentanmeldung 7 514 769 (Publikationsnummer 2 271 616) ist eine Schaltung zur Ermittlung einer Größe $c = \sqrt{a^2 + b^2}$ bekannt, bei der Eingangsspannungen a, b jeweils über getrennte Schalter, die mit Schaltimpulsen des Einschaltdauerverhältnisses $t_1/(t_1 + t_2) = a/c$ bzw. $b/c$ betätigt werden, am Eingang eines gemeinsamen Glättungsgliedes überlagert werden. Dieses Glättungsglied liefert die Größe $(a \cdot a/c + b \cdot b/c)$ ohne Verwendung von Invertierern.

Der Erfindung liegt die Aufgabe zugrunde, eine andere analoge Rechenschaltung zur Berechnung einer Summe $a = \sum_i b_i \cdot c_i$ aus Produkten der Eingangsspannungen $b_i$ und $c_i$ anzugeben, die mit einem möglichst geringen Aufwand an Bauelementen und Abgleichsarbeit auskommt, für die Verarbeitung zeitlich veränderlicher Größen ausgelegt ist und nach dem Prinzip der Pulsbreitenmultiplikation arbeitet.

Diese Aufgabe wird durch einen Multiplizierer der eingangs angegebenen Art gelöst, bei dem für alle Produktbildungen ein gemeinsames Glättungsglied mit einer vorgelagerten Verknüpfungsstelle vorgesehen ist. Die jeweils dem ersten Faktor eines Produkts entsprechenden Eingangsspannungen aller Produkte sind an einen gemeinsamen Invertierer angeschlossen. Die Invertiererausgangsspannungen und gleichzeitig auch, über getrennte, mittels die zweiten Faktoren jedes Produktes darstellender Schaltimpulse betätigbare Schalter, die jeweils dem Erstfaktor eines Produktes entsprechenden Eingangsspannungen sind unter Verwendung von Proportionalgliedern an der Verknüpfungsstelle überlagert. Die zu berechnende Summe ist am Ausgang des Glättungsgliedes abgegriffen. Wird zur Glättung ein Operationsverstärker verwendet, so wird das Proportionalglied von entsprechenden Widerständen in den Zuleitungen zu dem Verstärkereingang (Verknüpfungsstelle) gebildet.

Da gemäß der Erfindung für die Glättung aller Produkte ein einziges Glättungsglied verwendet wird, können zeitlich veränderbare Eingangsspannungen verarbeitet werden, ohne daß Verzerrungen zu befürchten sind, die durch die Überlagerung von Signalen mehrerer, nur schwer aufeinander abstimmbarer Glättungsglieder entstehen könnten. Voraussetzung hierbei ist lediglich, wie allgemein bei der Verwendung von Pulsbreitenmultiplizierer, daß die Rechenfrequenz, d. h. die Frequenz der entsprechenden Schalter, wesentlich über der Frequenz der zeitlich veränderlichen Eingangsspannungen liegt. Ferner kann die zur Addition der einzelnen Produkte nötige Verknüpfungsstelle am Eingang eines als Glättungsglied beschalteten Operationsverstärkers liegen, wodurch ein eigener Additions-Operationsverstärker sowie ein nachgeschalteter Invertierer entfallen kann, der häufig bei einem derartigen Additionsverstärker zur Herstellung der richtigen Polarität des Ausgangssignals benötigt wird. Außerdem reduziert sich der schaltungstechnische Aufwand auch dadurch, daß der beim Stand der Technik für jede Produktbildung nötige Umschalt-Invertierer durch einen gemeinsamen Invertierer ersetzt wird.

In manchen Anwendungsfällen, insbesondere bei der Steuerung von umlaufenden Maschinen, ist die simultane Bildung zweier Summen $a_1 = b \cdot c + d \cdot e$ und $a_2 = b \cdot f + d \cdot g$ nötig. Die Erfindung ermöglicht hierbei diese simultane Summenbildung ohne erheblichen Aufwand, vielmehr sind lediglich ein weiteres Glättungsglied mit vorgeschalteter Verknüpfungsstelle und Proportionalglied sowie zwei weitere Schalter für die zweite Summenbildung nötig. Die Ausgangsspannung des für die erste Produktbildung nötigen Invertierers wird über ein weiteres Proportionalglied an die Verknüpfungsstelle des weiteren Invertierers gelegt. Ferner sind die den jeweiligen ersten Faktoren b bzw. d entsprechenden Eingangsspannungen über je einen weiteren Schalter, der entsprechend den weiteren Faktoren f und g betätigt wird, ebenfalls der Verknüpfungsstelle aufgeschaltet. An den Ausgängen der beiden Glättungsglieder liegen die beiden zu berechnenden Summen als Ausgangsspannungen an.

Von besonderer Bedeutung ist hierbei der Fall $f = -e$, $g = c$. Stehen nämlich die Größen c und e für cos φ und sin φ eines Winkels φ, so ermöglicht es die Rechenschaltung, einen Vektor a, der bezüglich eines kartesischen Koordinatensystems durch die Koordinaten b und d gegeben ist, entsprechend den Gleichungen

$$a_1 = b \cdot \cos \varphi + d \cdot \sin \varphi$$
$$a_2 = -b \cdot \sin \varphi + d \cdot \cos \varphi \tag{1}$$

nunmehr durch die Koordinaten $a_1$ und $a_2$ in einem gegenüber dem ursprünglichen Koordinatensystem um den Winkel gedrehten Koordinatensystem darzustellen. Dadurch kann z. B. bei einer umlaufenden Maschine ein Vektor, dessen Koordinaten im raumfesten Koordinatensystem durch entsprechende Meßwerte festgelegt werden, auf ein mit der Maschine umlaufendes Koordinatensystem transformiert werden. Auch die umgekehrte Transformation

$$a_1 = b \cdot \cos \varphi - d \cdot \sin \varphi$$
$$a_2 = b \cdot \sin \varphi + d \cdot \cos \varphi \tag{2}$$

von einem umlaufenden Koordinatensystem auf ein raumfestes Koordinatensystem ist leicht möglich.

Für die Koordinatentransformationen kann die angegebene Schaltung mit zwei Glättungsgliedern verwendet werden, wobei die zur Darstellung von cos φ bei den Produkten b · cos φ und d · cos φ nötigen Schalter mit den gleichen Schaltimpulsen betätigt werden. Zur Darstellung von − sin φ bei dem Produkt − b · sin φ können die bereits zur Bildung von d · sin φ benötigten Schaltimpulse verwendet werden, wobei lediglich das Öffnen mit dem Schließen des Schalters vertauscht werden muß, was z. B. durch ein NOR-Glied in der entsprechenden Schaltimpulsleitung möglich ist.

Die erfindungsgemäße Schaltung kann vorteilhaft eingesetzt werden, wenn die Lage und/ oder der Betrag eines umlaufenden Vektors, z. B. des Magnetflußvektors bei einer Drehfeldmaschine, bezüglich eines anderen, z. B. eines raumfesten, Koordinatensystems ermittelt werden soll. Als Eingangsgrößen werden dabei der Schaltung die Koordinatenwerte des Vektors im raumfesten System vorgegeben, die z. B. aus Messungen am Ständer der Maschine gewonnen werden können. Eine derartige Anwendung ist in den Ausführungsbeispielen näher erläutert.

Anhand eines Anwendungsbeispieles, eines Ausführungsbeispieles und vier Figuren wird die Erfindung gegenüber dem Stand der Technik näher erläutert.

Es zeigen

Figur 1 die Lage eines Vektors in zwei gegeneinander verdrehten Koordinatensystemen,

Figur 2 ein Blockschaltbild einer Anordnung zur Umrechnung der Koordinaten des Vektors von einem Koordinatensystem ins andere Koordinatensystem,

Figur 3 eine schaltungstechnische Realisierung des Blockschaltbildes nach Figur 2 mit Elementen aus dem Stand der Technik,

Figur 4 eine schaltungstechnische Realisierung des Blockschaltbildes nach Figur 2 unter Verwendung der Erfindung.

Das Anwendungsbeispiel betrifft eine feldorientierte Regelung einer Asynchronmaschine. Die in den Ständerwicklungen fließenden Ströme können zu einem Ständerstromvektor i zusammengesetzt werden, dessen Koordinaten in einem ständerbezogenen Koordinatensystem aus entsprechenden Messungen gegeben sind. Ebenso können aus Ständergrößen (Ströme und Spannungen) die Koordinaten des Magnetflußvektors $\psi$ bestimmt werden.

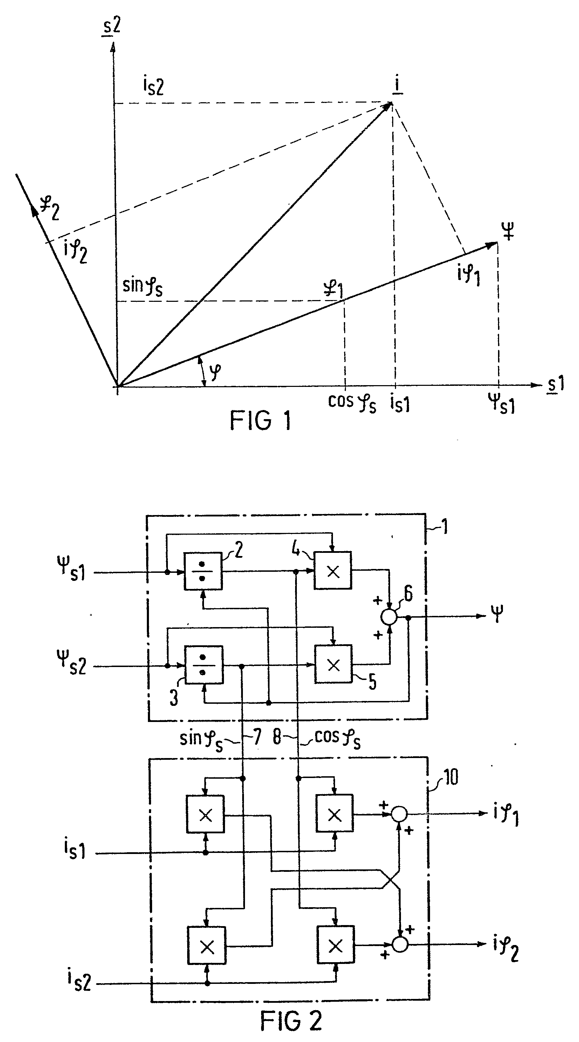

Nach der DE-PS 1 941 312 kann die Asynchronmaschine gesteuert oder geregelt werden, indem der Ständerstrom in Abhängigkeit von zwei elektrischen Größen gebracht wird, die feldachsenbezogene Größen sind. Dazu wird der Ständerstromvektor in eine zum Magnetflußvektor parallele und in eine dazu senkrechte Komponente aufgespalten, d. h. der Ständerstrom wird in einem kartesischen, sich mit dem Magnetflußvektor drehenden System dargestellt. Die feldparallele Stromkomponente bestimmt dabei den Feldbetrag, die feldsenkrechte Komponente das Moment der Maschine. In Figur 1 ist mit $s_1$ und $s_2$ das ständerbezogene Koordinatensystem, mit $\varphi_1$ und $\varphi_2$ das feldorientierte Koordinatensystem bezeichnet. $i_{s1}$ und $i_{s2}$ sind die ständerbezogenen, $i_{\varphi1}$ und $i_{\varphi2}$ die feldbezogenen Komponenten des Stromvektors. $\varphi$ ist der Winkel zwischen dem Feldvektor $\psi$ bzw. dem dazugehörigen Einheitsvektor $\varphi_1$ und dem Vektor $s_1$.

Es stellt sich also die Aufgabe, die zu einem Bezugsvektor parallele und die senkrechte Komponente eines Vektors zu berechnen, wobei der Vektor und der Bezugsvektor jeweils durch seine Koordinaten in einem kartesischen Koordinatensystem vorgegeben ist. Da der Bezugsvektor umläuft und der Vektor seine Lage zum Bezugsvektor ändert, sind die in die Rechenschaltung einzugebenden Eingangsgrößen zeitlich veränderlich, wobei diese Veränderung jedoch langsam gegenüber der Arbeitsfrequenz der Rechenschaltung ist.

Zunächst müssen aus den ständerbezogenen Koordinaten des Magnetflußvektors die entsprechenden Koordinaten des Einheitsvektors ermittelt werden, um die Lage des neuen Koordinatensystems, d. h. den Winkel $\varphi$, zu ermitteln. Hierzu dient entsprechend Figur 2 ein Vektoranalysator, wie er z. B. in der US-PS 3 671 731 beschrieben ist. Dabei werden die Eingangsgrößen $\psi_{s1}$ und $\psi_{s2}$ jeweils zunächst in Dividierern 2 und 3 durch den Betrag $\psi$ des Vektors dividiert und anschließend werden die Dividiererausgangsgrößen in Multiplizierern 4 und 5 mit den Eingangsgrößen $\psi_{s1}$ und $\psi_{s2}$ multipliziert, so daß an einer additiven Verknüpfungsstelle 6 die Größe $\psi_{s1}^2/\psi + \psi_{s2}^2/\psi$ anliegt. Diese Größe $\psi$, die am Verknüpfungsglied 6 abgegriffen werden kann, wird dabei den Divisoreingängen der Dividierer 2 und 3 zugeführt.

Am Ausgang des Dividierers 2 liegt somit die Größe $\psi_{s1}/\psi = \cos\varphi_s$ an, die über einen Ausgang 8 abgegriffen werden kann. An einem entsprechenden Ausgang 7 wird die Größe $\psi_{s2}/\psi = \sin\varphi_s$ vom Ausgang des Multiplizierers 3 herausgeführt.

Nach dieser Analyse des Bezugsvektors $\psi$ erfolgt nun die Transformation des Vektors i in einem Vektordreher 10, wie er z. B. in Figur 6 der

erwähnten DE-PS 19 41 312 dargestellt ist. Diese Koordinatentransformation erfolgt nach den bekannten Formeln (1) :

$$i_{\varphi1} = i_{s1}\cos\varphi_s + i_{s2}\sin\varphi_s$$
$$i_{\varphi2} = - i_{s1}\sin\varphi_s + i_{s2}\cos\varphi_s \tag{3}$$

Da eine Pulsbreitenmultiplikation mit großer Genauigkeit durchführbar ist, wäre es wünschenswert, das in Figur 2 gezeigte Blockschaltbild mit Pulsbreitenmultiplikatoren zu verwirklichen.

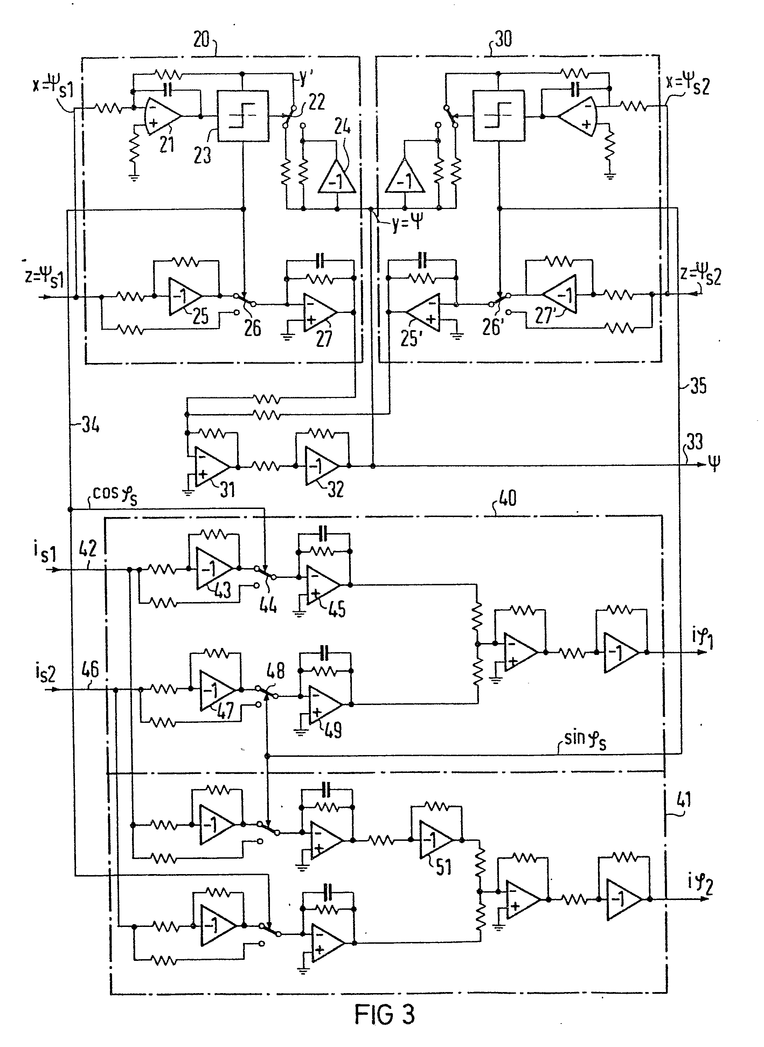

In Figur 3 ist mit 20 der bereits eingangs erwähnte bekannte Pulsbreitenmultiplikator dargestellt. An dem einen Eingang eines I-Gliedes 21 sind der x-Eingang und der Ausgang eines ersten Umschalters 22 gelegt. Der I-Glied-Ausgang ist auf einen Grenzwertmelder 23 gelegt, der ein binäres Ausgangssignal abgibt und sein Signal ändert, sobald die vom I-Glied zugeführte Spannung gleich der vom Ausgang des Umschalters 22 rückgeführten Spannung $y' = \pm y$ ist. Mit dem Signal des Grenzwertmelders wird der Umschalter 22 betätigt, der zwischen der am y-Eingang angelegten Spannung und einer gleichen Spannung umgekehrter Polarität umschaltet, wozu ein Invertierer 24 vorgesehen ist. Die Spannung am z-Eingang wird ebenfalls über eine von einem Invertierer 25 und einem zweiten Umschalter 26 gebildete Umschalteinrichtung auf ein Glättungsglied 27 im Takt des Grenzwertmelders 23 umgeschaltet. Während der Zeit $t_1$ wird die Spannung z direkt, während der Zeit $t_2$ mit umgekehrtem Vorzeichen über den Schalter weitergegeben, so daß das daran angeschlossene Glättungsglied 27 einen Mittelwert $Ua = (z \cdot t_1 - z \cdot t_2)/(t_1 + t_2)$ bildet. Da für die Zeiten $t_1$ und $t_2$ jedoch gilt $(t_1 - t_2)/(t_1 + t_2) = x/y$, steht am Ausgang 28 des Pulsbreiten-Multiplizierers 20 die Spannung $z \cdot x/y$ an. Im gegebenen Anwendungsfall wird $y = \psi$ und $x = z = \psi_{s1}$ eingegeben, wobei für die einzelnen Bestimmungsgrößen der Vektoren und für die dazugehörigen Spannungen die gleichen Symbole gewählt sind.

Der Pulsbreitenmultiplizierer 20 entspricht also der Kombination des Dividierers 2 und des Multiplizierers 4 in Figur 2 zur Bildung der Größe $\psi_{s1}^2/\psi$. Zur Bildung von $\psi_{s2}^2/\psi$ wird ein vollkommen gleich aufgebauter Pulsbreitenmultiplizierer 30 verwendet. Die Ausgangssignale beider Pulsbreitenmultiplizierer werden nun in einer Additionsstufe 31 mit nachgeschaltetem Invertierer 32 addiert, um eine Gleichspannung $\psi = (\psi_{s1}^2 + \psi_{s2}^2)/\psi$ zu erhalten, die an die y-Eingänge der beiden Pulsbreitenmultiplizierer gelegt wird und außerdem an einem Ausgang 33 abgegriffen werden kann. Die Größen $\cos\varphi_s = \psi_{s1}/\psi$ und $\sin\varphi_s = \psi_{s2}/\psi$ werden dabei nicht als Gleichspannungen gebildet, sondern als eine Impulsfolge (Rechteckkurve), z. B. aus « High »- und « Low »-Signalen, über die Leitungen 34, 35 aus dem Vektoranalysator geführt.

Diese Impulsfolgen können nun zur Impulsbreitenmultiplikation im Vektordreher 40 verwendet werden. Zur Bildung von $i_{\varphi1} = i_{s1} \cdot \cos \varphi_s + i_{s2} \sin \varphi_s$ wird ein Doppelmultiplizierer 41 verwendet. Dem Eingang 42 wird die Spannung $i_{s1}$ zugeführt, die in analoger Weise mittels eines Invertierers 43 und eines Umschalters 44 mit alternierendem Vorzeichen an ein Glättungsglied 45 gelegt wird. Der Umschalter 44 wird mit der die Größe $\cos \varphi_s$ darstellenden Impulsfolge über die Leitung 34 betätigt. Im Glättungsglied 45 wird demnach durch Mittelung über die entsprechend den Schaltimpulsdauern $t_1$ und $t_2$ gewichteten Spannungen $+ i_{s1}$ und $- i_{s1}$ das erste Produkt gebildet.

Das zweite Produkt wird aus der am Eingang 46 anstehenden Eingangsspannung $i_{s2}$ mittels eines weiteren Invertierers 47, Umschalters 48 (der über die Leitung 35 mit den die Größe $\sin \varphi_s$ darstellenden Schaltimpulsen betätigt wird) und Glättungsgliedes 49 gebildet. Beide Produkte werden anschließend addiert. Da Glättungsglieder und Addierer vorteilhaft mit Operationsverstärkern aufgebaut werden, ist ein nachfolgender Invertierer zur Herstellung des richtigen Vorzeichens nötig.

Auf vollkommen analoge Weise kann ein zweiter Doppelmultiplizierer 50 zur Bildung von $i_{\varphi2} = - i_{s1} \sin \varphi_s + i_{s2} \cos \varphi_s$ aufgebaut sein, dessen Eingänge für $i_{s1}$ und $i_{s2}$ bzw. $\sin \varphi_s$ und $\cos \varphi_s$ ebenfalls an die Leitungen 42, 46 bzw. 34, 35 angeschlossen sind. Dabei ist lediglich zur Darstellung des negativen Vorzeichens ein zusätzlicher Invertierer 51 nötig.

Ein derartiger Aufbau ermöglicht die Berechnung der Produktsummen mit hoher Genauigkeit. Man kommt dabei mit zwei Schaltimpulsgeneratoren aus. Ein solcher Schaltimpulsgenerator enthält, wie beschrieben, einen Grenzwertmelder 23 mit einem binären Ausgangssignal, dem eine Sägezahn-Spannungskurve und eine Hilfsspannung (in diesem Falle $y' = \pm \psi$) vorgegeben ist und der jeweils beim Schnittpunkt der Sägezahn-Spannungskurve mit der Hilfsspannung sein Ausgangssignal ändert.

Die Eingangsgrößen $\psi_{s1}$ und $\psi_{s2}$ bzw. $i_{s1}$ und $i_{s2}$ sind entsprechend der Frequenz der Drehfeldmaschine zeitabhängig. Diese Zeitabhängigkeiten heben sich jedoch bei der Produktsummen-Bildung weitgehend auf und die resultierenden Größen $\psi$ bzw. $i_{e1}$ und $i_{e2}$ sind in weit geringerem Maße zeitabhängig. Werden nun die jeweils für eine Summenbildung benötigten Glättungsglieder (z. B. 43 und 47) nicht sorgfältig aufeinander abgestimmt, so können bei der Addition am Eingang der anschließenden Additionsverstärker Schwebungen auftreten, die eine falsche Zeitabhängigkeit vorspiegeln. Weitere Überlagerungen können dadurch entstehen, daß zwei mit unterschiedlichen Frequenzen arbeitende Sägezahngeneratoren verwendet werden.

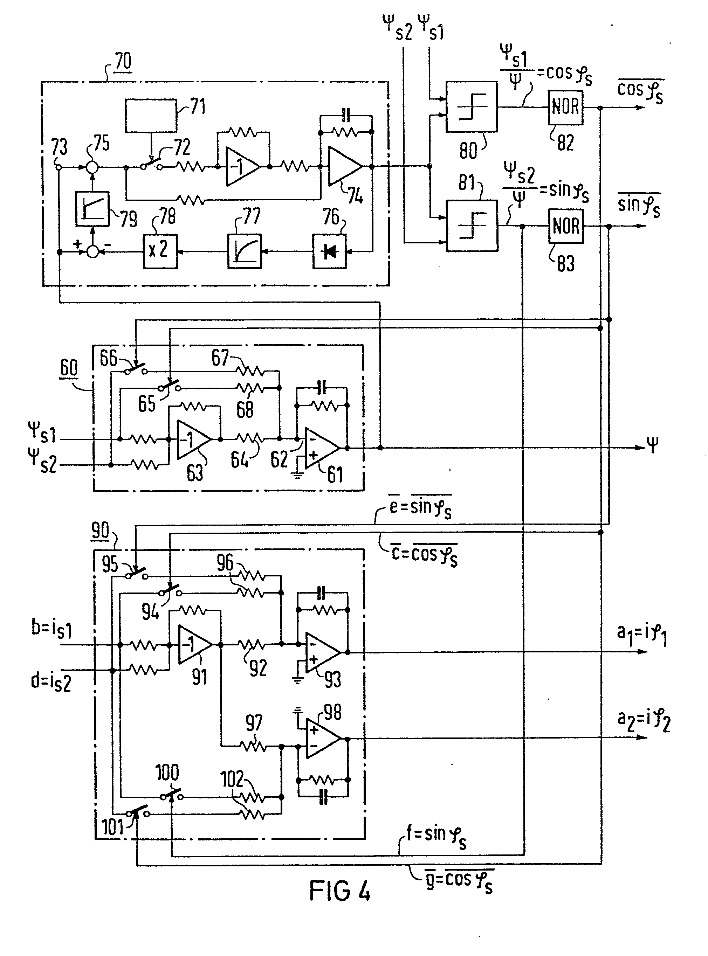

Gemäß der Erfindung wird nun die Produktsummenbildung in einer Rechenschaltung 60 (Figur 4) vorgenommen, die die Bauteile 25, 26, 27, 25', 26', 27', 31 und 32 ersetzt. Zur Bildung der Summe $\psi_{s1} \cos \varphi_s + \psi_{s2} \sin \varphi_s$ wird nur ein einziges Glättungsglied benutzt, vorteilhaft ein Operationsverstärker 61, dessen Rückführung aus einer Parallelschaltung eines Widerstandes einer Kapazität besteht. Der Eingang 62 dieses Operationsverstärkers ist dann eine Verknüpfungsstelle, die eine Addition der dem Operationsverstärker aufgeschalteten Eingangsspannungen bewirkt. Die der Rechenschaltung zuzuführenden ersten Faktoren $\psi_{s1}$ und $\psi_{s2}$ werden dieser Verknüpfungsstelle über einen gemeinsamen Invertierer 63 und einen Widerstand 64 zugeführt. Ferner werden diese Faktoren jeweils über Schalter 65 und 66 und entsprechende Widerstände 67 und 68 dieser Verknüpfungsstelle aufgeschaltet, wobei die Widerstände 67 und 68 jeweils den halben Widerstandswert des Widerstandes 64 aufweisen und somit als ein Proportionalglied mit der Verstärkung 2 wirken. Durch Schließen der Schalter 65 und 66 werden also die Spannungen $\psi_{s1}$ und $\psi_{s2}$ mit doppeltem Wert zu den vom Invertierer 63 gelieferten, invertierten Spannungen addiert, so daß während der Schließzeit der Schalter ($t_1$) die Eingangsspannungen mit ihrem ursprünglichen Vorzeichen, während der Öffnungszeit $t_2$ mit umgekehrtem Vorzeichen anliegen. Die Schalter 65 und 66 werden analog den Schaltern 26, 26' in Figur 3 von Schaltimpulsen betätigt, die die Pulsbreitenmultiplikation mit den Faktoren $\cos \varphi$ und $\sin \varphi$ bewirken.

Der schaltungstechnische Aufwand für diese Rechenschaltung 60 ist vergleichsweise gering. Insbesondere ist vorteilhaft, daß die Glättung der gepulsten Spannungen erst nach ihrer Addition in einem gemeinsamen Glättungsglied erfolgt und sich das Zeitverhalten des Glättungsgliedes daher in gleicher Weise für beide Summanden auswirkt. Es entstehen keine störenden Überlagerungen.

Die Bildung der Schaltimpulse für die Schalter 65 und 66 kann im Prinzip wie in Figur 3 erfolgen. Jedoch kann vorteilhaft eine Anordnung nach Figur 4 verwendet werden, die nur mit einem einzigen Sägezahngenerator konstanter Frequenz auskommt. Mit 70 ist ein derartiger Sägezahngenerator bezeichnet, wie er z. B. in der deutschen Patentanmeldung P 29 08 942.7 beschrieben ist. Dieser Generator besteht aus einem Frequenzgeber 71, der über den Schalter 72 einer Umschalteinrichtung eine am Eingang 73 anliegende Eingangsspannung mit alternierendem Vorzeichen an einen Integrator 74 legt. Das Integratorausgangssignal ist eine Dreieckskurve und wird über eine Rückführungsleitung einer Verknüpfungsstelle 75 am Eingang der Umschalteinrichtung über einen Gleichrichter, z. B. einen Vollwellengleichrichter 76, ein Glättungsglied 77, ein Proportionalglied 78 und einen PI-Regler 79 zugeführt. Bei Vollwellengleichrichtung entspricht das Ausgangssignal des Glättungsgliedes 77 der halben Amplitude der Dreiecksspannung. Wird daher dieses Signal im Proportionalglied 78 verdoppelt und am Eingang des PI-Reglers mit dem am Eingang 73 anliegenden Spannungssignal verglichen, so wird dadurch erreicht, daß die Amplitude der Sägezahnspannung genau proportional der Eingangsspannung an der Klemme 73 ist. Im vorliegenden Fall wird der Klemme 73 die Ausgangsspannung $\psi$ der Rechenschaltung 60 zugeführt.

Die auf diese Weise erzeugte Sägezahn-Referenzspannungskurve wird zwei Grenzwertmeldern 80 und 81 zugeführt, denen als Grenzwerte die Spannungen $\psi_{s1}$ und $\psi_{s2}$ aufgeschaltet sind. Diese Grenzwertmelder erzeugen je ein binäres Signal, das sich jeweils beim Schnittpunkt der Referenzspannungskurve mit den aufgeschalteten Grenzwerten ändert. Diese Signalfolgen (Rechteckspannungskurven) können nun als Schaltsignale zur Darstellung der Größen $\cos\varphi_s = \psi_{s1}/\psi$ und $\sin\varphi_s = \psi_{s2}/\psi$ dienen. Dabei ist auch die Darstellung der Größen $-\cos\varphi_s$ und $-\sin\varphi_s$ möglich, indem nur die Rolle der Impulse beim Schließen und Öffnen der zugehörigen Schalter vertauscht wird. Dies kann dadurch geschehen, daß den Grenzwertgebern je ein Negationsglied 82, 83 (NOR-Glied) nachgeschaltet ist, das den Wert des binären Ausgangssignals der Grenzwertgeber invertiert. Da die Schalter 65 und 66 der Rechenschaltung 60 nur dann Eingangsspannungen mit ihrem ursprünglichen Vorzeichen an das Glättungsglied 61 legen, wenn die Grenzwertmelder 80 und 81 ansprechen, d. h. die Referenz-Sägezahnkurve über den Grenzwerten $\psi_{s1}$ und $\psi_{s2}$ liegen, und da das Glättungsglied den negativen Mittelwert der gepulsten Eingangsspannungen liefern, werden die Schaltimpulse für die Schalter 65 und 66 am Ausgang der NOR-Glieder 82 und 83 abgegriffen.

Zur Berechnung der Größen $i_{\varphi 1}$ und $i_{\varphi 2}$ nach Formel (3) werden die Rechteckkurven für $\cos\varphi$ und $\sin\varphi$ im Vektordreher 90 mit den Eingangsspannungen $i_{s1}$ und $i_{s2}$ multipliziert. Auch ein derartiger Vektordreher kann vorteilhaft mit der erfindungsgemäßen Rechenschaltung aufgebaut werden. Zunächst wird die Summe $a_1 = b \cdot c + d \cdot e$ gebildet, wobei den Eingängen für b und d die Größen $i_{s1}$ und $i_{s2}$, den Eingängen für c und e die Größen $\sin\varphi_s$ und $\cos\varphi_s$ aufgeschaltet wird. Hierzu werden, analog zur Rechenschaltung 60, die Spannungen b und d am Eingang eines Invertierers 91 summiert. Das Invertiererausgangssignal wird über einen Widerstand 92 einem Glättungsglied 93 zugeführt. Ferner werden die Spannungen b und d über die Schalter 94 und 95 und entsprechende Widerstände 96 ebenfalls dem Eingang des Glättungsgliedes 93 zugeführt. Da die Widerstände 96 jeweils den halben Widerstandswert des Widerstandes 92 aufweisen, wirken sie als Proportionalglied zur Verdoppelung der von den Schaltern 94 und 95 kommenden Spannungen, die am Eingang 93 mit der vom Invertierer 91 kommenden Spannung additiv verknüpft werden. Am Ausgang des Glättungsgliedes 93 kann die Größe $a1 = i_{\varphi 1}$ abgegriffen werden.

Zur Darstellung der Größe $i_{\varphi 2}$ muß simultan eine Summe $a_2 = b \cdot f + d \cdot g$ gebildet werden. Dies geschieht dadurch, daß das Ausgangssignal des Invertierers 91 über einen weiteren Widerstand 87 an das Glättungsglied 98 gelegt wird.

Ferner werden die Spannungen b und d über weitere Schalter 100 und 101 und Widerstände 102 am Eingang des Glättungsgliedes 98 zur Invertiererausgangsspannung addiert. Da die Widerstände 102 wiederum nur den halben Widerstandswert des Widerstandes 97 besitzen, stellen sie ein Proportionalglied zur Verdoppelung der anliegenden Spannung dar. Am Ausgang a2 wird die Summe abgegriffen.

Zur Realisierung der Formel (3) werden die Schalter 94 und 95 von den Ausgangsimpulsen der NOR-Glieder 82 und 83 betätigt. Da in diesem Falle $f = -e$ und $g = c$ zu setzen ist, wird der zur Spannung b gehörende weitere Schalter 100 von den Komplementärsignal des zum Schalter 95 gehörenden Schaltsignals betätigt, d. h. die nötige Vorzeichenumkehr wird durch eine logische Vertauschung aus dem gleichen Ausgangssignal des Grenzwertmelders 81 abgeleitet. Die Schalter 101 und 94, die zur Darstellung des gleichen Faktors $\cos\varphi_s$ benötigt werden, werden mit dem gleichen Ausgangssignal des Grenzwertmelders 80 betätigt.

Auch für den Vektordreher 90 gilt, daß durch die Verwendung gemeinsamer Glättungsglieder für jede Summenbildung das Auftreten störender zeitlicher Verzerrungen weitgehend vermieden wird, da alle Faktoren jeder Summe vom gleichen Zeitverhalten des zugehörenden Glättungsgliedes beeinflußt werden. Zeitraubende Abgleicharbeiten sind hierbei vollkommen entfallen. Ferner wird bei diesem Vektordreher noch deutlicher, daß durch die Erfindung der schaltungstechnische Aufwand erheblich vermindert wird.

Die Vorteile der Rechenschaltung nach der Erfindung werden schon bei einem Vektoranalysator oder einem Vektordreher allein und in verstärktem Maß bei einer aus beiden Bausteinen zusammengesetzten Schaltung und auch bei anderen Schaltungen erhalten, bei denen eine Summe aus mehreren Produkten von je zwei Faktoren gebildet werden müssen. Ebenso können Summen aus drei oder mehr Produkten auf diese Weise einfach gebildet werden. Für die in Figur 4 dargestellte Anordnung ist es unwesentlich, ob im Vektoranalysator für die Bildung von $\cos\varphi_s$ und $\sin\varphi_s$ der Ausgang $\psi$ der Schaltung in den zur Bildung der Schaltimpulse nötigen Sägezahngenerator zurückgeführt wird oder auf andere Weise ermittelt wird. Ferner kann auch der Vektordreher 80 zur Realisierung der Formel (2) verwendet werden, um beispielsweise einen im feldorientierten System gegebenen Vektor auf das ständerorientierte System zurückzutransformieren. In diesem Falle, in dem nur die Vorzeichen der Winkelfunktionen vertauscht werden müssen, müssen lediglich die entsprechenden Schaltimpulse negiert werden.

**Ansprüche**

1. Pulsbreitenmultiplizierer, bei dem eine dem ersten Faktor eines Produktes entsprechende Eingangsspannung mittels eines Schalters und eines Invertierers mit alternierendem Vorzeichen auf ein Glättungsglied aufschaltbar ist und der Schalter mittels den zweiten Faktor des Produktes darstellender breitenmodulierter Impulse betätigt wird, dadurch gekennzeichnet, daß zur Berechnung einer Summe ($\Sigma_i$ $b_i$ $c_i$) aus Produkten je zweier Faktoren ($b_i$, $c_i$) für alle Produktbildungen innerhalb der zu berechnenden Summe ($\Sigma_i$ $b_i$ $\cdot$ $c_i$) ein gemeinsames Glättungsglied (61) mit einer vorgelagerten Verknüpfungsstelle (62) vorgesehen ist, daß die jeweils dem ersten Faktor ($b_i = \psi_{s1}, \psi_{s2}$) eines Produktes entsprechenden Eingangsspannungen an einen gemeinsamen Invertierer (63) angeschlossen sind, daß die Invertiererausgangsspannungen und über getrennte, mittels die zweiten Faktoren ($\overline{c_i} = \overline{\cos}\ \varphi_s, \overline{\sin}\ \varphi_s$) jedes Produktes darstellender Schaltimpulse betätigbare Schalter (65, 66) auch die den ersten Faktoren ($b_i = \psi_{s1}, \psi_{s2}$) entsprechenden Eigangsspannungen unter Verwendung von Proportionalgliedern (67, 68, 64) an der Verknüpfungsstelle überlagert sind, und daß die zu berechnende Summe ($\psi_{s1}\ \cos\ \varphi_s + \psi_{s2}\ \sin\ \varphi_s$) am Ausgang des Glättungsgliedes (s1) abgegriffen ist.

2. Multiplizierer nach Anspruch 1, dadurch gekennzeichnet, daß zur Darstellung der zweiten Faktoren jedes Produktes je ein Grenzwertmelder mit einem binären Ausgangssignal (80, 81) vorgesehen ist, dem eine Sägezahn-Spannungskurve und eine dem Faktor entsprechende Hilfsspannung vorgegeben ist, und daß der Grenzwertmelder jeweils beim Schnittpunkt der Sägezahn-Spannungskurve mit der Hilfsspannung sein Ausgangssignal ändert.

3. Multiplizierer nach Anspruch 2, dadurch gekennzeichnet, daß für alle Produkte als Sägezahnspannungskurve eine gemeinsame Dreieckskurve Vorgegebener Amplitude und konstanter Frequenz erzeugt wird und daß die Hilfsspannungen als den zweiten Faktoren der Produkte proportionale Bruchteile der Dreiecksamplitude vorgegeben sind.

4. Multiplizierer nach einem der Ansprüche 1 bis 3, dadurch gekennzeichnet, daß zur simultanen Bildung zweier Summen $a_1 = b \cdot c + d \cdot e$ und $a_2 = b \cdot f + d \cdot g$ jeweils die den ersten Faktoren entsprechenden Eingangsspannungen ($b = i_{s1}$, $d = i_{s2}$) über je einen weiteren, entsprechend den zweiten Faktoren ($f = - \sin \varphi_s, \overline{g} = \overline{\cos\ \varphi_s}$) betätigbaren Schalter (100, 101) und ein weiteres Proportionalglied (92, 96) und die Invertierer (91) Ausgangsspannung einer einem weiteren Glättungsglied (98) vorgelagerten weiteren Verknüpfungsstelle aufgeschaltet sind, und daß die zu berechnende zweite Summe ($a_2 = i_{\varphi2}$) am Ausgang des weiteren Glättungsgliedes (98) abgegriffen ist.

5. Multiplizierer nach Anspruch 4, dadurch gekennzeichnet, daß für den Fall $f = - e$ und $g = c$ die zur Darstellung dieser Faktoren f und g nötigen Schaltimpulse der weiteren Umschalter (100, 101) von den zur Darstellung der Faktoren e und c verwendeten Schaltimpulsen abgegriffen und das negative Vorzeichen durch ein Inversionsglied (83) erhalten ist.

6. Anwendung des Multiplizierers nach einem der Ansprüche 1 bis 5 bei einem Vektoranalysator und/oder einem Vektordreher für die feldorientierte Regelung von Drehfeldmaschinen.

## Claims

1. A pulse-width multiplier wherein an input voltage corresponding to the first factor of a product can be supplied to a smoothing element by means of a switch and an inverter having alternating preceding signs, and wherein the switch is operated by means of width-modulated pulses which represent the second factor of the product, characterised in that in order to evaluate a sum ($\Sigma_i$ $b_i$ $c_i$) from products of two factors ($b_i$, $c_i$) in each case for all product formations within the sum ($\Sigma_i$ $b_i$ $\cdot$ $c_i$) to be evaluated, a common smoothing element (61) having a preceding combining point (62) is provided, that the input voltages, which respectively correspond to the first factor ($b_i = \psi_{s1}, \psi_{s2}$) of a product, are connected to a common inverter (63), that the inverter output voltages and the input voltages, which correspond to the first factors ($b_i = \psi_{s1}, \psi_{s2}$) and can be operated by means of switching pulses which represent the second factors ($c_i = \cos \varphi_s, \sin \varphi_s$) of each product, are superimposed at the combining point employing proportional elements (67, 68, 64), and that the sum ($\psi_{s1} \cos \varphi_s + \psi_{s2} \sin \varphi_s$) to be evaluated is read at the output of the smoothing element (s1).

2. A multiplier as claimed in Claim 1, characterised in that in order to represent the second factors of each product a limit value generator having a binary output signal (80, 81) is provided in each case, which limit value generator is given a saw-tooth voltage curve and an auxiliary voltage corresponding to the factor, and that the limit value generator changes its output signal at the intersection of the saw-tooth voltage curve and the auxiliary voltage.

3. A multiplier as claimed in Claim 2, characterised in that a common triangle curve of predetermined amplitude and constant frequency is produced for all products as a saw-tooth voltage curve, and that the auxiliary voltages are given proportional fractions of the triangle amplitude as the second factors of the products.

4. A multiplier as claimed in one of Claims 1 to 3, characterised in that in order to simultaneously form two sums $a_1 = b \cdot c + d \cdot e$ and $a_2 = b \cdot f + d \cdot g$ the input voltages ($b = i_{s1}$, $d = i_{s2}$) corresponding to the first factors are respectively supplied via a further switch (110, 101), which can be operated in accordance with the second factors ($f = - \sin \varphi_s, \overline{g} = \overline{\cos \varphi_s}$), and a further proportional element (92, 96) and the inverter (91) output voltage are supplied to a further combining location which precedes a further smoothing element (98), and that the second sum ($a_2 = i_{\varphi2}$) to be

evaluated is read at the output of the further smoothing element (98).

5. A multiplier as claimed in Claim 4, characterised in that for the case f = − e and g = c, the switching pulses of the further change-over switch (100, 101), which are required in order to represent these factors f and g, are tapped from the switching pulses used for the representation of the factors e and c and the negative preceding sign is obtained by means of an inversion element (83).

6. Use of the multiplier as claimed in one of Claims 1 to 5 in a vector analyser and/or a vector rotating device for the field-orientated regulation of rotary-field machines.

## Revendications

1. Multiplicateur de largeurs d'impulsions, dans lequel une tension d'entrée qui correspond au premier facteur d'un produit est susceptible d'être appliquée, à l'aide d'un commutateur et un inverseur, avec des signes alternants à un dispositif de lissage et le commutateur étant commandé à l'aide d'impulsions modulées en largeur, représentant le second facteur du produit, caractérisé par le fait que pour le calcul d'une somme $(\Sigma_i\, b_i\, \overline{c_i})$ à partir de produits de deux facteurs $(b_i, c_i)$, il est prévu, pour toutes les formations de produits comprises dans la somme à calculer $(\Sigma_i\, b_i \cdot c_i)$, un dispositif de lissage commun (61) avec un point combinatoire aval (62), que les tensions d'entrée qui correspondent respectivement au premier facteur $(b_i = \psi_{s1}, \psi_{s2})$ d'un produit sont appliquées à un inverseur commun (63), que les tensions de sortie de l'inverseur et, par l'intermédiaire de commutateurs (65, 66), qui sont susceptibles d'être commandés par des impulsions qui représentent les seconds facteurs $(c_1 = \cos \varphi_s, \sin \varphi_s)$ de chaque produit, aussi les tensions d'entrée qui correspondent aux premiers facteurs $(b_i = \psi_{s1}, \psi_{s2})$ sont superposées, au niveau du point combinatoire, en utilisant des éléments proportionnels (67, 68, 64), et que la somme à calculer $(\psi_{s1} \cos \varphi_s + \psi_{s2} \sin \varphi_s)$ est prélevée à la sortie du dispositif de lissage (s1).

2. Multiplicateur selon la revendication 1, caractérisé par le fait que pour la représentation des seconds facteurs de chaque produit, il est prévu respectivement un dispositif de signalisation de valeur limite avec un signal de sortie binaire (80, 81), auquel sont prescrites une courbe de tension en dents de scie et une tension auxiliaire qui correspond à l'un des facteurs et que le dispositif de signalisation de valeur limite modifie son signal de sortie au niveau du point d'intersection entre la courbe de tension en dents de scie et la tension auxiliaire.

3. Multiplicateur selon la revendication 2, caractérisé par le fait que pour tous les produits, on produit, comme courbe de tension en dents de scie, une courbe triangulaire commune d'amplitude prédéterminée et de fréquence constante, et que les tensions auxiliaires sont données à l'avance sous la forme de fractions de l'amplitude triangulaire, qui sont proportionnelles au second facteur du produit.

4. Multiplicateur selon l'une des revendications 1 à 3, caractérisé par le fait que pour la formation simultanée de deux sommes $a_1 = b \cdot c + d \cdot e$ et $a_2 = b \cdot f + d \cdot g$, les tensions respectives $(b = i_{s1}, d = i_{s2})$ qui correspondent aux premiers facteurs, sont appliquées par respectivement un commutateur supplémentaire (100, 101) susceptible d'être commandé en fonction des seconds facteurs $(f = - \sin \varphi_s, \overline{g} = \overline{\cos \varphi_s})$ et par un élément proportionnel supplémentaire (92, 96), de même que la tension de sortie de l'inverseur (91), a un point combinatoire supplémentaire disposé en amont d'un dispositif de lissage supplémentaire (98), et que la seconde somme à calculer $(a_2 = i\varphi_2)$ est prélevée à la sortie du dispositif de lissage supplémentaire (98).

5. Multiplicateur suivant la revendication 4, caractérisé par le fait que pour le cas f = − e et g = c, les impulsions de commutation pour les commutateurs supplémentaires (100, 101), qui sont nécessaires pour la représentation de ces facteurs f et g, sont prélevées sur les impulsions de commutation utilisées pour la représentation des facteurs e et c, et le signe négatif est obtenu à l'aide d'un dispositif inverseur.

6. Mise en œuvre du multiplicateur selon l'une des revendications 1 à 5 dans un analyseur vectoriel et/ou rotateur vectoriel pour le réglage, à orientation du champ, de machines à champ tournant.

FIG 1

FIG 2

FIG 3

0 019 139

2

FIG 4